# EUROPEAN PATENT APPLICATION

(11) **EP 4 628 315 A1**
(43) Date of publication of application: **08.10.2025**
(21) Application number: 23897740.9
(22) Date of filing: 27.11.2023
(51) Int. Cl.: B41M 5/00, B41J 2/01, C09D 11/32, C09D 11/322

(54) **INKJET RECORDING METHOD AND INKJET RECORDING DEVICE**

(30) Priority: 28.11.2022 JP 2022189590
(71) Applicant: FUJIFILM Corporation, Tokyo 106-8620 (JP)
(72) Inventor: KARIYA, Toshihiro, Ashigarakami-gun, Kanagawa 258-8577 (JP); SHINOHARA, Ryuji, Ashigarakami-gun, Kanagawa 258-8577 (JP); SHIMOYAMA, Tatsuya, Ashigarakami-gun, Kanagawa 258-8577 (JP); HOUJOU, Hiroaki, Ashigarakami-gun, Kanagawa 258-8577 (JP); HONGO, Yushi, Ashigarakami-gun, Kanagawa 258-8577 (JP)
(74) Representative: Klunker IP Patentanwälte PartG mbB
(86) International application number: PCT/JP2023/042417
(87) International publication number: WO 2024/117092

(57) **Abstract**

An ink jet recording method, which includes: applying ink to a recording medium that is being transported; and heating and drying the applied ink, in which the heating and drying of the ink is performed using a heating drying device, the heating drying device includes a heating roller and a guide roller configured to come into contact with the inked to the recording medium, the ink contains water, a pigment, a resin, and a wax, a total content of the pigment, the resin, and the wax with respect to a total amount of the ink is 5.0% by mass to 11.0% by mass, a drying temperature of the ink in the heating and drying is 120°C or higher and a melting temperature of the wax or lower, and in a case where a content of the wax with respect to the total amount of the ink is represented by Cw% by mass and a surface roughness Ra of an outer peripheral surface of the guide roller is represented by RaX µm, a RaX/Cw ratio is 1.0 to 4.0.

## Description

### BACKGROUND OF THE INVENTION

### 1. Field of the Invention

The present disclosure relates to an ink jet recording method and an ink jet recording device.

### 2. Description of the Related Art

In the related art, various investigations have been conducted on the ink jet recording method.

For example, as a drying device that can be used for drying ink in the ink jet recording method and can reduce a drying time, JP2020-16355A discloses a drying device that dries a drying target object transported with liquid applied on the drying target object, the drying device including: one or a plurality of first heating members configured to heat the drying target object; and one or a plurality of second heating members configured to heat the drying target object heated by the first heating members, in which the one or the plurality of first heating members include a first heating member configured to heat the drying target object to a higher heating temperature than a heating temperature of the second heating members. JP2020-16355A discloses that the drying device includes at least one guide roller configured to come into contact with a liquid applied surface of the drying target object to which the liquid is applied and to guide the drying target object.

In addition, JP2022-037537A discloses a printing apparatus including: a printing unit configured to attach ink to an elongated printing surface of a print medium that is being transported; and a drying mechanism configured to dry the ink by heating the print medium unloaded from the printing unit, in which the drying mechanism includes at least first to fourth turning rollers each configured to come into contact with a back surface with no ink attached in the print medium unloaded from the printing unit to change a transport direction of the print medium, a printing surface contact roller disposed downstream of the fourth turning roller in the transport direction and configured to come into contact with the printing surface of the print medium to turn the transport direction of the print medium, and at least first to third heating units each configured to heat the print medium guided by the first to fourth turning rollers and the printing surface contact roller.

### SUMMARY OF THE INVENTION

Incidentally, in a case where high-speed ink jet recording (specifically, ink jet recording where the transportation speed of a recording medium is high and the heating temperature during heating and drying of ink is high) is performed using the heating drying device (for example, the drying device described in JP2020-16355A and the drying mechanism described in JP2022-037537A) including the guide roller configured to come into contact with the inked to the recording medium), it may be difficult to suppress a decrease in jettability from an ink jet head and flaws in the obtained image (hereinafter, also referred to as image flaws) simultaneously.

An object of an aspect of the present disclosure is to provide an ink jet recording method and an ink jet recording device that can suppress a decrease in the j ettability of ink and image flaws.

The present disclosure includes the following aspects.
<1> An ink jet recording method comprising:
   applying ink to a recording medium by an ink jet method while transporting the recording medium at a transportation speed of 60 m/min or higher; and
   heating and drying the inked to the recording medium while transporting the recording medium to which the ink is applied at a transportation speed of 60 m/min or higher to obtaining an image,
   in which the heating and drying is performed using a heating drying device including
      a heating roller configured to come into contact with a non-inked surface in the recording medium to which the ink is applied and to heat the inked to the recording medium through the recording medium, and
      a guide roller configured to come into contact with an inked surface in the recording medium to which the ink is applied and to guide the recording medium to which the ink is applied,
   the ink contains water, a pigment, a resin, and a wax,
   a total content of the pigment, the resin, and the wax with respect to a total amount of the ink is 5.0% by mass to 11.0% by mass,
   a drying temperature of the ink in the heating and drying is 120°C or higher and a melting temperature of the wax or lower, and
   in a case where a content of the wax with respect to the total amount of the ink is represented by Cw% by mass and an arithmetic average roughness Ra of an outer peripheral surface of the guide roller defined according to JIS B0601:2013 is represented by RaX µm, a RaX/Cw ratio is 1.0 to 4.0.
<2> The ink jet recording method according to <1>,
   in which in a case where the content of the wax with respect to the total amount of the ink is represented by Cw% by mass and the total content of the pigment, the resin, and the wax with respect to the total amount of the ink is represented by Ct% by mass, a Cw/Ct ratio is 0.10 to 0.30.
<3> The ink jet recording method according to <1> or <2>,
   in which in a case where the content of the wax with respect to the total amount of the ink is represented by Cw% by mass and a content of the resin with respect to the total amount of the ink is represented by Cp% by mass, a Cw/Cp ratio is 0.50 to 1.50.
<4> The ink jet recording method according to according to any one of <1> to <3>,
   in which a kinetic friction coefficient of the outer peripheral surface of the guide roller is 0.03 to 0.10.
<5> The ink jet recording method according to any one of <1> to <4>,
   in which the guide roller includes a surface layer containing a fluororesin.
<6> The ink jet recording method according to any one of <1> to <5>,
   in which both of a transportation speed of the recording medium during the application of the ink and a transportation speed of the recording medium during the heating and drying are 100 m/min or higher.
<7> The ink jet recording method according to any one of <1> to <6>,
   in which in TOF-SIMS analysis on a surface of the image, a peak intensity of the wax is higher than a peak intensity of the pigment.
<8> The ink jet recording method according to any one of <1> to <7>,
   in which the resin contains resin particles, and
   a content of the resin particles with respect to the total amount of the ink is 0.3% by mass to 5.0% by mass.
<9> An ink jet recording device for use in the ink jet recording method according to any one of <1> to <8>, the ink jet recording device comprising:
   an ink jet head configured to apply the ink to the recording medium; and
   the heating drying device.

According to an aspect of the present disclosure, it is possible to provide an ink jet recording method and an ink jet recording device that can suppress a decrease in the jettability of ink and image flaws.

### BRIEF DESCRIPTION OF THE DRAWINGS

Fig. 1 is a view conceptually showing an example of an ink jet recording device used for an ink jet recording method according to the present disclosure.
Fig. 2 is an enlarged view showing a heating drying device in the ink jet recording device according to the example shown in Fig. 1.

### DESCRIPTION OF THE PREFERRED EMBODIMENTS

In the present specification, a numerical range indicated using "to" means a range including numerical values described before and after "to" as a minimum value and a maximum value, respectively.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferable aspects is a more preferable aspect.

In the present specification, the meaning of the term "step" includes not only an independent step but also a step whose intended purpose is achieved even in a case in which the step is not clearly distinguished from other steps.

In the present specification, "image" means general films, and "image recording" means formation of the image (that is, the film). In addition, the concept of "image" in the present specification also includes a solid image.

In the present specification, a concept of "(meth)acrylate" includes both acrylate and methacrylate, and a concept of "(meth)acrylic acid" includes both acrylic acid and methacrylic acid.

### [Ink Jet Recording Method]

An ink jet recording method according to the present disclosure (hereinafter, also simply referred to as "recording method") comprises:
applying ink to a recording medium using an ink jet method while transporting the recording medium at a transportation speed of 60 m/min or higher; and
obtaining an image by heating and drying the inked to the recording medium while transporting the recording medium to which the ink is applied at a transportation speed of 60 m/min or higher,
in which the heating and drying is performed using a heating drying device including
a heating roller configured to come into contact with a non-inked surface in the recording medium to which the ink is applied and to heat the inked to the recording medium through the recording medium and
a guide roller configured to come into contact with an inked surface in the recording medium to which the ink is applied and to guide the recording medium to which the ink is applied,
the ink contains water, a pigment, a resin, and a wax,
a total content of the pigment, the resin, and the wax with respect to a total amount of the ink is 5.0% by mass to 11.0% by mass,
a drying temperature of the ink in the heating and drying is 120°C or higher and a melting temperature of the wax or lower, and
in a case where a content of the wax with respect to the total amount of the ink is represented by Cw% by mass and a surface roughness Ra of an outer peripheral surface of the guide roller defined according to JIS B0601:2013 is represented by RaX µm, a RaX/Cw ratio is 1.0 to 4.0.

In the recording method according to the present disclosure, in a case where high-speed ink jet recording (specifically, ink jet recording where the transportation speed of the recording medium is 60 m/min or higher and the heating temperature during the heating and drying of the ink is 120°C or higher) is performed using the heating drying device including the guide roller, a decrease in the jettability of the ink from an ink jet head can be suppressed, and image flaws (that is, flaws in the obtained image) can be suppressed.

Specifically, in the recording method according to the present disclosure, the total content of the pigment, the resin, and the wax with respect to the total amount of the ink is 11.0% by mass or less. As a result, a decrease in the jettability of the ink is suppressed.

In addition, in the recording method according to the present disclosure, the drying temperature of the ink in the heating and drying is the melting temperature of the wax or lower. As a result, image flaws are suppressed. The reason for this is presumed to be as follows. In a case where the drying temperature of the ink where the total content of the pigment, the resin, and the wax is 11.0% by mass or less exceeds the melting temperature of the wax, the wax penetrates into the ink film (that is, the film formed of the inked to the recording medium; hereinafter, the same applies). As a result, the pigment is exposed from the surface of the ink film, and a kinetic friction coefficient of the ink film may increase. On the other hand, in the recording method according to the present disclosure, the drying temperature of the ink is the melting temperature of the wax or lower. As a result, the phenomenon in which the wax penetrates into the ink film is suppressed, and thus image flaws are suppressed.

In addition, in the recording method according to the present disclosure, the RaX/Cw ratio is 1.0 or more. As a result, a decrease in the jettability of the ink is suppressed. The reason for this is presumed to be that, in a case where the RaX/Cw ratio is 1.0 or more, Cw% by mass that is the content of the wax with respect to the total amount of the ink is reduced.

In addition, in the recording method according to the present disclosure, the RaX/Cw ratio is 4.0 or less such that image flaws are suppressed. The reason for this is presumed to be that, in a case where the RaX/Cw ratio is 4.0 or less, Rax that is the surface roughness Ra of the outer peripheral surface of the guide roller is reduced, and thus, the kinetic friction coefficient of the outer peripheral surface of the guide roller is reduced.

### <Heating Drying Device X>

A heating drying device (hereinafter, also referred to as "heating drying device X") used for the recording method according to the present disclosure includes
a heating roller configured to come into contact with a non-inked surface in the recording medium to which the ink is applied and to heat the inked to the recording medium through the recording medium, and
a guide roller configured to come into contact with an inked surface in the recording medium to which the ink is applied and to guide the recording medium to which the ink is applied.

As described above, in general, in the recording method using the heating drying device X, image flaws caused by the guide roller that comes into contact with the inked surface may occur.

Regarding this point, although the recording method according to the present disclosure is the recording method using the heating drying device X, image flaws are suppressed.

The following factors contribute to the effect of suppressing image flaws in the recording method according to the present disclosure, the factors including:
a factor that the ink contains the wax;
a factor that the drying temperature of the ink is the melting temperature of the wax or lower; and
a factor that the RaX/Cw ratio is 4.0 or less.

Examples of the heating drying device X include the following heating drying device X1.

The heating drying device X1 includes
a plurality of heating rollers, and
further includes, as a transport path through which the recording medium to which the ink is applied is transported,
a first transport path through which the recording medium to which the ink is applied is transported while being in contact with the plurality of heating rollers, and
a second transport path through which the recording medium having passed through the first transport path is transported while being guided by the guide roller to be in contact again with at least one of the plurality of heating rollers in contact with the first transport path.

The heating drying device X1 includes the second transport path through which the recording medium is transported while being in contact again with at least one of the plurality of heating rollers in contact with the first transport path such that the heating and drying of the ink can be efficiently performed.

Accordingly, the heating drying device X1 is advantageous in, for example, reducing the size of the heating drying device and reducing the heating and drying time (for example, increasing the transportation speed).

The heating drying device X1 may further include, between the first transport path and the second transport path, a heating drum configured to come into contact with a non-inked surface in the recording medium to which the ink is applied and to heat the inked to the recording medium through the recording medium.

As a result, the heating and drying of the ink can be more efficiently performed.

In a case where the heating drying device X1 includes the heating drum, a heating temperature of at least one of the plurality of heating rollers may be higher than a heating temperature of the heating drum.

As a result, the heating and drying of the ink can be more efficiently performed.

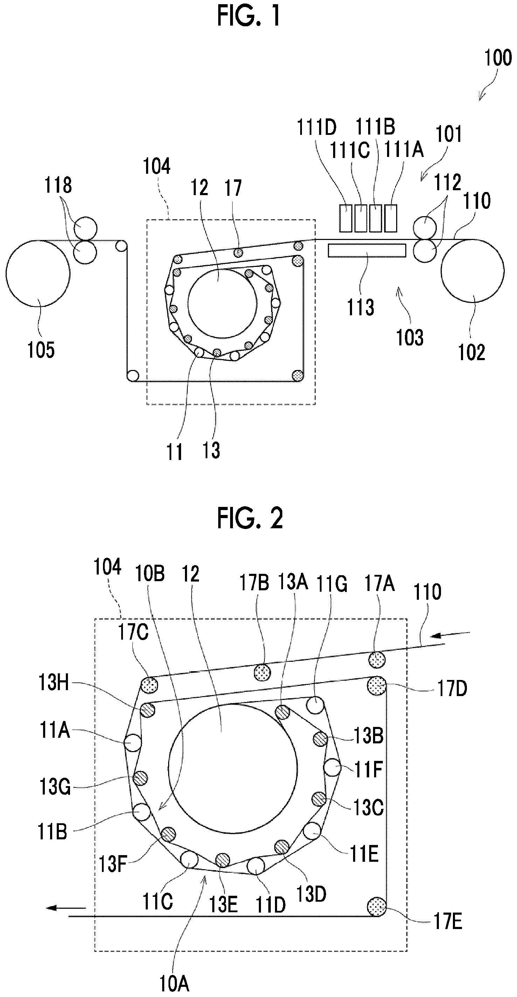

A specific example of the heating drying device X will be described below in detail (refer to Fig. 2).

### <Guide Roller>

The heating drying device X includes a guide roller configured to come into contact with an inked surface in the recording medium to which the ink is applied and to guide the recording medium to which the ink is applied.

### (RaX)

In the outer peripheral surface of the guide roller, the arithmetic average roughness Ra (that is, the above-described RaX; hereinafter also simply referred to as "RaX") defined according to JIS B0601:2013 is preferably 2 µm to 15 µm and more preferably 2 µm to 8 µm.

In a case where RaX of the outer peripheral surface of the guide roller is 15 µm or less, the kinetic friction coefficient is easily reduced. Therefore, image flaws are further suppressed.

In a case where RaX of the outer peripheral surface of the guide roller is 2 µm or more, the guide roller is more easily manufactured.

Here, in a case where the guide roller includes a surface layer described below, the outer peripheral surface of the guide roller refers to a surface of the surface layer.

In Examples described below, RaX of the outer peripheral surface of the guide roller was measured by SURFCOM 1500SD3 (manufactured by Tokyo Seimitsu Co., Ltd.).

The kinetic friction coefficient of the outer peripheral surface of the guide roller is preferably 0.03 to 0.22, more preferably 0.03 to 0.13, and still more preferably 0.03 to 0.10, and still more preferably 0.03 to 0.08.

In a case where the kinetic friction coefficient of the outer peripheral surface of the guide roller is 0.22 or less, image flaws are further suppressed.

In a case where the kinetic friction coefficient of the outer peripheral surface of the guide roller is 0.03 or more, the guide roller is more easily manufactured.

The kinetic friction coefficient of the outer peripheral surface of the guide roller according to the present disclosure refers to a value measured using the following method.

Using a urethane rubber ball indenter having an outer diameter of 3/8 inch and a rubber hardness of 90 degrees as a measurement indenter, a frictional force (gf) of the outer peripheral surface of the guide roller is measured under conditions of a test load of 50 gf, a speed of 10 mm/sec, and a measurement distance of 50 mm. The average value of frictional force (gf) measured in a period between the time of 0.4 seconds from the measurement start and the time of 1.0 second from the measurement start is obtained. The obtained average value (gf) of frictional force is divided by the test load (gf) to obtain a value as the kinetic friction coefficient of the outer peripheral surface of the guide roller.

In Examples described below, the above-described measurement was performed using a surface property tester ("HEIDON 14FW", manufactured by Shinto Scientific Co., Ltd.).

It is preferable that the guide roller includes a surface layer containing a fluororesin.

As a result, the kinetic friction coefficient of the outer peripheral surface of the guide roller is easily reduced.

Examples of the fluororesin include
tetrafluoroethylene-perfluoroalkyl vinyl ether copolymer (PFA),
polytetrafluoroethylene (PTFE),
tetrafluoroethylene-hexafluoropropylene copolymer (FEP),
ethylene-tetrafluoroethylene copolymer (ETFE),
polyvinylidene fluoride (PVDF),
polychlorotrifluoroethylene (PCTFE), and
tetrafluoroethylene-hexafluoropropylene-perfluoroalkyl vinyl ether copolymer (EPE).

The fluororesin in the surface layer may be used alone or in combination of two or more kinds.

It is preferable that the fluororesin in the surface layer contains PTFE.

In a case where the guide roller includes the surface layer containing a fluororesin, a core of the guide roller is not particularly limited.

Examples of the core include aluminum, an aluminum alloy, and stainless steel.

The surface layer in the fluororesin can be formed, for example, by applying a primer material to the core, applying (coating) the fluororesin to the primer material, and performing a heat treatment for calcination.

In addition, the guide roller in the surface layer containing the fluororesin can be formed by covering the core with a heat-shrinkable fluororesin tube and heat-shrinking the heat-shrinkable fluororesin tube with hot air.

The layer thickness of the surface layer containing the fluororesin is, for example, 100 µm or more, preferably 100 µm to 1000 µm, and more preferably 100 µm to 500 µm.

### <Heating Roller>

The heating drying device X includes a heating roller configured to come into contact with a non-inked surface in the recording medium to which the ink is applied and to heat the inked to the recording medium through the recording medium.

The heating roller is not particularly limited, and a well-known heating roller can be used.

Examples of the well-known heating roller include a heating roller including a roller main body formed of metal and a heat source (for example, a halogen lamp) built in the roller main body.

Examples of the metal that is the material of the roller main body include aluminum, an aluminum alloy, and stainless steel.

The heating roller may refer to, for example, JP2020-16355A (paragraphs 0032 to 0037, Fig. 3).

### <Heating Drum>

The heating drying device X may include a heating drum configured to come into contact with a non-inked surface in the recording medium to which the ink is applied and to heat the inked to the recording medium through the recording medium.

For example, the heating drying device X1 may further include, between the first transport path and the second transport path, a heating drum configured to come into contact with a non-inked surface in the recording medium to which the ink is applied and to heat the inked to the recording medium through the recording medium.

As a result, the heating and drying of the ink can be more efficiently performed.

The heating drum may refer to, for example, a structure of the heating roller described in JP2020-16355A (paragraphs 0032 to 0037, Fig. 3).

A preferable aspect of the heating drum is the same as the preferable aspect of the heating roller.

A diameter of the heating drum is preferably larger than a diameter of the heating roller.

In a case where the heating drying device X (heating drying device X1) includes the heating drum, a heating temperature of at least one of the plurality of heating rollers may be higher than a heating temperature of the heating drum.

As a result, the heating and drying of the ink can be more efficiently performed.

### <Hot Air Drying Device>

The heating drying device X may include a hot air drying device (for example, a dryer) configured to blow hot air to the inked surface in the recording medium to dry the ink.

For example, in a case where the plurality of heating rollers are disposed in an arc shape, a plurality of dryers as the hot air drying device may be disposed outside the heating rollers disposed in the arc shape.

### <Ink Jet Recording Device including Heating Drying Device X>

The recording method according to the present disclosure can be performed using an ink jet recording device including the above-described heating drying device X and an ink jet head.

The ink jet recording device may refer to, for example, JP2020-16355A.

Hereinafter, the above-described ink jet recording device will be described with reference to the drawings.

In the drawing and description of the present disclosure, substantially the same elements (for example, components or parts) will be represented by the same reference numerals, and the description thereof may not be repeated.

Fig. 1 is a view conceptually showing an ink jet recording device 100 that is an example of the ink jet recording device used in the ink jet recording method according to the present disclosure.

As shown in Fig. 1, the ink jet recording device 100 includes an ink application unit 101 including ink jet heads 111A to 111D configured to jet and apply ink to continuous paper 110 as a recording medium.

In the ink application unit 101, for example, full-line ink jet heads 111A, 111B, 111C, and 111D corresponding to four colors are disposed in order from the upstream side in a transport direction of the continuous paper 110. The heads 111 apply, for example, black (K) ink, cyan (C) ink, magenta (M) ink, and yellow (Y) ink to the continuous paper 110, respectively.

The kinds and number of the colors are not limited to this example.

The ink jetted from each of the heads 111 contains water, a pigment, a resin, and a wax.

The continuous paper 110 is fed from a feeding roller 102, is transported by a transport roller 112 of a transport unit 103 on a transport guide member 113 disposed opposite to the ink application unit 101, and is guided to be transported (moved) by the transport guide member 113.

The continuous paper 110 to which the ink is applied by the ink application unit 101 is transported by a discharge roller 118 through a heating drying device 104, and is wound by a winding roller 105.

The heating drying device 104 is an example of the heating drying device used in the recording method according to the present disclosure, and more specifically is an example of the above-described heating drying device X11 (that is, the heating drying device X1 in the aspect including the heating drum).

Fig. 2 is an enlarged view showing the heating drying device 104.

As shown in Fig. 2, the heating drying device 104 includes, as a heating member configured to come into contact with a non-inked surface of the continuous paper 110 and to heat the continuous paper 110, heating rollers 11 (11A to 11J) and a heating drum 12.

The plurality of heating rollers 11 have a smaller diameter than the heating drum 12.

The diameters of the plurality of heating rollers 11 may be the same as or different from each other.

The heating drying device 104 includes guide rollers 13A to 13K configured to come into contact with an inked surface of the continuous paper 110 to which the ink is applied (specifically, the continuous paper 110 heated by the heating drum 12) and to guide the continuous paper 110 to which the ink is applied.

Here, the guide roller 13A is a guide roller that guides the continuous paper 110 heated by the heating drum 12 to the heating roller 11J.

Each of the heating rollers 13B to 13K is a guide roller that guides the continuous paper 110 guided by the guide roller 13A to come into contact with the heating rollers 11I to 11A.

In the heating drying device 104, a transport path of the continuous paper 110 is formed by the plurality of heating rollers 11 (that is, the heating rollers 11A to 11J; hereinafter, the same applies), the heating drum 12, and the plurality of guide rollers 13 (that is, the guide rollers 13A to 13K; hereinafter, the same applies) described below.

Specifically, the continuous paper 110 is transported while being in contact with an outer peripheral side of the plurality of heating rollers 11 disposed in an arc shape upstream of the heating drum 12, passes through the heating drum 12, is guided by the plurality of guide rollers 13, and is transported again while being contact with an inner peripheral side of the plurality of heating rollers 11.

In this case, even on the upstream side of the heating drum 12 and even after passing through the heating drum 12, the plurality of heating rollers 11 come into contact with the non-inked surface side of the continuous paper 110 and heat and dry the inked to the continuous paper through the continuous paper 110.

In addition, as in the plurality of heating rollers 11, the heating drum 12 also comes into contact with the non-inked surface side of the continuous paper 110 and heats and dries the inked to the continuous paper through the continuous paper 110.

The plurality of guide rollers 13 guide the continuous paper 110 to the plurality of heating rollers 11 while being in contact with the inked surface side of the continuous paper 110.

In addition, the heating drying device 104 includes:
guide rollers 17A to 17D for guiding the continuous paper 110 transported from the ink application unit 101 in a direction of an arrow in Fig. 2 to the heating roller 11A in the heating drying device 104; and
a plurality of guide rollers 17E and 17D for guiding the continuous paper 110 heated by the plurality of heating rollers 11 and the heating drum 12 to the outside of the heating drying device 104.

In the heating and drying in the heating drying device 104, the ink is heated through the continuous paper 110 while the non-inked surface of the continuous paper 110 is in contact with the plurality of heating rollers 11 disposed in an arc shape.

Next, the ink is heated through the continuous paper 110 while the non-inked surface of the continuous paper 110 is in contact with the heating drum 12 that is disposed inside the plurality of heating rollers 11 disposed in an arc shape.

Next, the continuous paper 110 is guided to the heating rollers 11 again by the guide rollers 13, and the ink is heated through the continuous paper 110 while the non-inked surface of the continuous paper 110 is in contact again with the heating rollers 11.

Here, in the heating drying device 104, the heating drum 12 may be removed.

In this case, for example, by changing the heating drum 12 to a guide roller having a smaller diameter, the non-inked surface of the continuous paper 110 can be brought into contact with the heating rollers 11 twice as in the heating drying device 104.

As described above, the heating drying device 104 includes:
a first transport path 10A through which the continuous paper 110 to which the ink is applied is transported while being in contact with the plurality of heating rollers 11, and
a second transport path 10B through which the continuous paper 110 having passed through the first transport path 10A is transported while being guided by the plurality of guide rollers 13 to be in contact again with the plurality of heating rollers 11 in contact with the first transport path 10A.

Therefore, the heating and drying of the inked to the continuous paper 110 can be efficiently performed.

Accordingly, in the heating drying device 104, for example, a reduction in the length of the heating drying device and a reduction in the size of the heating drying device can be realized.

In the second transport path 10B, the continuous paper 110 does not need to come into contact with all of the plurality of heating rollers 11 in contact with the first transport path 10A.

In the second transport path 10B, the continuous paper 110 may come into contact with at least a part of the plurality of heating rollers 11 in contact with the first transport path 10A.

The heating drying device 104 includes, between the first transport path 10A and the second transport path 10B, a third transport path through which the continuous paper 110 having passed through the first transport path 10A is transported while being in contact with the heating drum 12.

Therefore, the heating and drying of the inked to the continuous paper 110 can be more efficiently performed.

In the heating drying device 104, a heating temperature of at least one of the plurality of heating rollers 11 may be higher than a heating temperature of the heating drum 12.

In this case, the heating and drying of the inked to the continuous paper 110 can be more efficiently performed.

In the heating drying device 104, a plurality of dryers as a hot air drying device configured to blow hot air to the surface of the ink film may be disposed outside the plurality of heating rollers 11 disposed in an arc shape (not shown).

In this case, the heating and drying of the inked to the continuous paper 110 can be more efficiently performed.

In the ink jet recording method using the ink jet recording device 100, each of the inks applied from the ink jet heads 111A to 111D contains water, a pigment, a pigment dispersing resin, and an acrylic resin as a resin other than the pigment dispersing resin.

In addition, the guide rollers 13A to 13K, 17E, and 17F in the heating drying device 104 of the ink jet recording device 100 guide the continuous paper 110 while being in contact with the inked surface in the recording medium to which the ink is applied.

In the ink jet recording method using the ink jet recording device 100, a product (A × B) of A (the unit is mgKOH/g) that is an acid value of the acrylic resin (that is, the acrylic resin as the resin other than the pigment dispersing resin) in each of the inks and B that is a kinetic friction coefficient of the outer peripheral surface of the guide roller is 1.0 to 5.0.

In the ink jet recording method using the ink jet recording device 100, at least one ink and at least one guide roller may satisfy a relationship that the RaX/Cw ratio is 1.0 to 4.0.

### <Recording Medium>

The recording medium in the recording method according to the present disclosure is not particularly limited, and examples thereof include coated paper used for general offset printing or the like. In the coated paper, a coating layer is provided by applying a coating material to a surface of high-quality paper, alkaline paper, or the like that is mainly formed of cellulose and is not surface-treated in general.

The coated paper may be generally commercially available. As the coated paper, for example, coated paper for general printing can be used, and specific examples thereof include coated paper (A2, B2) such as "OK TOPCOAT+" (manufactured by OJI PAPER CO., LTD.), and "AURORA COAT" and "ULITE" (manufactured by NIPPON PAPER INDUSTRIES CO., LTD.), and art paper (A1) such as "TOKUBISHI ART" (manufactured by MITSUBISHI PAPER MILLS LIMITED).

The recording medium may be a low water absorption recording medium or a non-water absorption recording medium.

In the present disclosure, the low water absorption recording medium refers to a recording medium having a water absorption coefficient Ka of 0.05 mL/m²·ms^{1/2} to 0.5 mL/m²·ms^{1/2}, preferably 0.1 mL/m²·ms^{1/2} to 0.4 mL/m²·ms^{1/2}, and more preferably 0.2 mL/m²·ms^{1/2} to 0.3 mL/m²·ms^{1/2}.

In addition, the non-water absorption recording medium refers to a recording medium having a water absorption coefficient Ka of less than 0.05 mL/m²·ms^{1/2}.

The water absorption coefficient Ka is synonymous with one described in JAPAN TAPPI Pulp and Paper Test Method No. 51:2000 (published by Pulp and Paper Technology Association). Specifically, the absorption coefficient Ka is calculated from a difference between the amount of water transfer at a contact time of 100 ms and the amount of water transfer at a contact time of 900 ms, using an automatic scanning absorptometer KM500Win (manufactured by KUMAGAI RIKI KOGYO Co., Ltd.).

It is preferable that the non-water absorption recording medium is a resin base. Examples of the resin base include a base obtained by molding a thermoplastic resin in a sheet shape.

It is preferable that the resin base contains polypropylene, polyethylene terephthalate, nylon, polyethylene, or polyimide.

The resin base may be a transparent resin base or a colored resin base, or at least a part thereof may be subjected to a metal vapor deposition treatment or the like.

The shape of the resin base is not particularly limited, but a sheet-like resin base is preferable. From the viewpoint of the productivity of a printed material, a sheet-like resin base with which a roll can be formed by winding is more preferable.

### <Transportation Speed of Recording Medium>

In the recording method according to the present disclosure, both of a transportation speed of the recording medium during the application of the ink and a transportation speed of the recording medium during the heating and drying are 60 m/min or higher.

As a result, high-speed ink jet recording is realized.

In addition, in general, in the high-speed ink jet recording that satisfies the transportation speed, a decrease in the jettability of the ink is likely to occur.

Accordingly, in the high-speed ink jet recording that satisfies the transportation speed, the effect of improving the jettability according to the definition "the RaX/Cw ratio is 1.0 or more" and the like in the recording method according to the present disclosure is significantly exhibited.

Here, both of the transportation speed of the recording medium during the application of the ink and the transportation speed of the recording medium during the heating and drying may be the same as or different from each other.

The upper limit of the transportation speed of the recording medium is, for example, 200 m/min.

Both of the transportation speed of the recording medium during the application of the ink and the transportation speed of the recording medium during the heating and drying are preferably 100 m/min or higher.

In this case, the effect of improving the jettability according to the definition "the RaX/Cw ratio is 1.0 or more" and the like in the recording method according to the present disclosure is significantly exhibited.

### <Drying Temperature of Ink>

In the recording method according to the present disclosure, a drying temperature of the ink in the heating and drying is 120°C or higher and a melting temperature of the wax or lower.

In the present disclosure, the drying temperature of the ink is the maximum temperature of the surface of the ink film, and refers to a value measured by a contactless thermometer.

In Examples described below, the drying temperature of the ink was measured by FT-H20 (manufactured by Keyence Corporation) as the contactless thermometer.

By adjusting the drying temperature of the ink in the heating and drying to be 120°C or higher, the high-speed ink jet recording is realized.

In addition, in general, in the high-speed ink jet recording that satisfies the drying temperature, image flaws are likely to occur.

However, in the recording method according to the present disclosure, the drying temperature of the ink in the heating and drying is the melting temperature of the wax or lower, and the RaX/Cw ratio is 4.0 or less. As described above, the phenomenon in which the wax penetrates into the ink film is suppressed, and thus image flaws are suppressed.

From the viewpoint of further suppressing image flaws, the drying temperature of the ink in the heating and drying is more preferably lower than or equal to "(Melting temperature of Wax) - 5°C".

### <TOF-SIMS Analysis of Surface of Image>

In the recording method according to the present disclosure, in time-of-flight secondary ion mass spectrometry (TOF-SIMS analysis) of the surface of the recorded image, it is preferable that a peak intensity of the wax is higher than a peak intensity of the pigment.

As a result, the phenomenon in which the wax penetrates into the ink film is further suppressed, and thus image flaws are further suppressed.

In Examples described below, the TOF-SIMS analysis was performed using the time-of-flight secondary ion mass spectrometer (TOF-SIMS) "PHI nano TOF II^{™}" (manufactured by ULVAC-PHI Inc.).

### <Ink>

The ink according to the present disclosure (the ink used in the recording method according to the present disclosure; hereinafter the same applies) contains water, a pigment, a pigment dispersing resin, and a wax.

The ink according to the present disclosure may contain other components.

### (Water)

The ink according to the embodiment of the present disclosure includes water.

The content of water with respect to the total amount of the ink is preferably 20% by mass or more, more preferably 30% by mass or more, and still more preferably 40% by mass or more.

The upper limit of the content of water also depends on the amounts of other components. The upper limit of the content of water with respect to the total amount of the ink may be, for example, 90% by mass or 80% by mass.

### (Pigment)

The ink according to the present disclosure contains at least one kind of a pigment.

The pigment may be an organic pigment or an inorganic pigment.

Examples of the organic pigment include an azo pigment, a polycyclic pigment, a chelate dye, a nitro pigment, a nitroso pigment, and aniline black. Among these, the organic pigment is preferably an azo pigment or a polycyclic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

A volume average particle diameter of the pigment is preferably in a range of 10 nm to 200 nm, more preferably in a range of 10 nm to 180 nm, and still more preferably in a range of 10 nm to 150 nm. In a case where the volume average particle diameter thereof is 200 nm or less, the color reproducibility is satisfactory, and the jettability is improved in a case where an image is recorded by an ink jet recording method. In addition, in a case where the volume average particle size is 10 nm or more, light fastness is improved.

In addition, a particle size distribution of the pigment is not particularly limited, and may be any of a wide particle size distribution or a monodispersed particle size distribution. Furthermore, a mixture of two or more pigments each having a monodispersed particle size distribution may be used.

The volume average particle size and the particle size distribution of the pigment are values measured by a particle size distribution analyzer (for example, MICROTRAC UPA (registered trademark) EX150 manufactured by NIKKISO CO., LTD.).

The content of the pigment with respect to the total amount of the ink is preferably 1% by mass to 20% by mass and more preferably 1% by mass to 10% by mass.

### (Resin)

The ink according to the present disclosure contains at least one kind of a resin.

Examples of the resin in the ink include a pigment dispersing resin, resin particles, and a water-soluble resin.

### - Pigment Dispersing Resin -

The resin in the ink may contain at least one kind of a pigment dispersing resin.

In the present disclosure, the pigment dispersing resin is a resin having a function of dispersing the pigment.

The form of the pigment dispersing resin is not particularly limited, and may be any of a random resin, a block resin, or a graft resin.

The pigment dispersing resin is preferably a resin having a crosslinking structure. It is considered that, in a case where the pigment dispersing resin is a resin having a crosslinking structure, the pigment dispersing resin is unlikely to be released from the surface of the pigment, and thus the dispersion stability of the pigment is high.

In the present disclosure, the resin refers to a compound having a weight-average molecular weight (Mw) of 1,000 or higher.

In the present disclosure, the weight-average molecular weight (Mw) refers to a value measured by gel permeation chromatography (GPC).

For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID x 15 cm, manufactured by Tosoh Corporation) are used as a column, and tetrahydrofuran (THF) is used as an eluent. In addition, the measurement is performed under measurement conditions of a sample concentration of 0.45% by mass, a flow rate of 0.35 mL/min, a sample injection volume of 10 µL, and a measurement temperature of 40°C using an RI detector. A calibration curve is created using 8 samples of "F-40", "F-20", "F-4", "F-1", "A-5000", "A-2500", "A-1000", and "n-propylbenzene" which are "Standard Samples TSK standard, polystyrene" (manufactured by TOSOH Corporation).

The resin having a crosslinking structure is not particularly limited as long as the resin has at least one crosslinking structure in a molecule.

Whether or not the resin in the ink has a crosslinking structure can be determined, for example, using the following method. First, the resin is separated from the ink by using a separation method such as solvent extraction. The presence or absence of the crosslinking structure can be comprehensively determined by analyzing the separated resin using various analysis methods such as a nuclear magnetic resonance method (NMR), an infrared spectroscopy method (IR), and a thermal analysis method.

The resin having a crosslinking structure (hereinafter, also referred to as "crosslinked resin") is formed, for example, by crosslinking a non-crosslinked resin (hereinafter, also referred to as "non-crosslinked resin") with a crosslinking agent. It is preferable that the non-crosslinked resin is a water-soluble resin.

In the present disclosure, "water-soluble" refers to a property in which 1 g or more of a substance is dissolved in 100 g of water at 25°C. "Water-soluble" refers to a property in which preferably 3 g or more (more preferably 10 g or more) of a substance is dissolved in 100 g of water at 25°C.

Even in a case where the non-crosslinked resin is water-soluble, the crosslinked resin is not necessarily water-soluble.

Examples of the non-crosslinked resin include a vinyl resin, an acrylic resin, a urethane resin, and a polyester resin. The non-crosslinked resin is preferably an acrylic resin.

It is preferable that the non-crosslinked resin is a resin containing a functional group that is crosslinkable with a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, it is preferable that the non-crosslinked resin is a resin containing a carboxy group.

It is preferable that the non-crosslinked resin is a copolymer having a structural unit derived from a monomer containing a carboxy group (hereinafter, referred to as "carboxy group-containing monomer"). The structural unit derived from the carboxy group-containing monomer in the copolymer may be used alone or in combination of two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinkability and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the non-crosslinked resin.

It is preferable that the non-crosslinked resin has a structural unit derived from a hydrophobic monomer in addition to the structural unit derived from a carboxy group-containing monomer.

The structural unit derived from the hydrophobic monomer in the copolymer may be used alone or in combination of two or more kinds thereof.

Examples of the hydrophobic monomer include (meth)acrylate containing an alkyl group having 1 to 20 carbon atoms, (meth)acrylate having an aromatic ring (for example, benzyl (meth)acrylate, phenoxyethyl (meth)acrylate, and the like), styrene, and a styrene derivative.

The content of the structural unit derived from the hydrophobic monomer with respect to the total amount of the non-crosslinked resin is preferably 60% by mass to 95% by mass, more preferably 65% by mass to 90% by mass, and still more preferably 70% by mass to 90% by mass.

The non-crosslinked resin is preferably a random copolymer including the structural unit derived from the carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth)acrylate having an aromatic ring, and still more preferably a copolymer having a structural unit derived from (meth)acrylic acid and a structural unit derived from benzyl (meth)acrylate.

The weight-average molecular weight (Mw) of the non-crosslinked resin is not particularly limited, but is preferably 3,000 to 300,000, more preferably 5,000 to 200,000, and still more preferably 7,000 to 100,000 from the viewpoint of the dispersibility of a white pigment.

The preferable ranges of the weight-average molecular weight of the crosslinked resin are the same as the preferable ranges of the weight-average molecular weight of the non-crosslinked resin.

It is preferable that the crosslinking agent used in a case where the non-crosslinked resin is crosslinked is a compound having two or more reaction sites with the non-crosslinked resin (for example, a resin containing a carboxy group). The crosslinking agent may be used alone or in combination of two or more kinds thereof.

A preferable combination of the crosslinking agent and the non-crosslinked resin is a combination of a compound containing two or more epoxy groups (that is, a bi- or higher functional epoxy compound) and a resin containing a carboxy group. In this combination, a crosslinking structure is formed by the reaction between the epoxy group and the carboxy group. It is preferable that the formation of the crosslinking structure by the crosslinking agent is performed after the pigment is dispersed by the non-crosslinked resin.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

The crosslinking agent may be a commercially available product.

Examples of the commercially available product include Denacol EX-321, EX-821, EX-830, EX-850, and EX-851 (manufactured by Nagase ChemteX Corporation).

From the viewpoints of a crosslinking reaction rate and dispersion stability after crosslinking, a molar ratio between a reaction site (for example, an epoxy group) in the crosslinking agent and a reaction site (for example, a carboxy group) in the non-crosslinked resin is preferably 1:1.1 to 1:10, more preferably 1:1.1 to 1:5, and still more preferably 1:1.1 to 1:3.

A mixing ratio between the pigment and the pigment dispersing resin is preferably 1:0.02 to 1:2, more preferably 1:0.03 to 1:1.5, and still more preferably 1:0.04 to 1:1 by mass.

### - Resin Particles -

From the viewpoint of further suppressing image flaws, it is preferable that the resin in the ink contains at least one kind of resin particles.

As a result, rub resistance of an image is further improved.

The resin particles contain a resin and may contain a core material or the like other than the resin, but it is preferable that the resin particles consist of only the resin.

The resin particles are preferably particles consisting of an acrylic resin, particles consisting of a polyester resin, particles consisting of a polyurethane resin, or particles consisting of a polyolefin resin, and more preferably particles consisting of an acrylic resin.

In the present disclosure, the acrylic resin refers to a resin having at least one of a structural unit derived from (meth)acrylic acid or a structural unit derived from (meth)acrylate.

The resin particles may refer to, for example, paragraphs 0038 to 0114 of WO2021/192720A and paragraphs 0109 to 0120 of JP2015-25076A.

From the viewpoint of further improving rub resistance of an image, a glass transition temperature (Tg) of the resin particles is preferably 90°C to 250°C and more preferably 100°C to 230°C.

Here, a measurement Tg obtained by actual measurement is employed as the glass transition temperature (Tg) of the resin particles. A method of measuring the measurement Tg can refer to paragraph 0111 of JP2015-25076A.

In a case where the ink according to the present disclosure contains the resin particles, the content of the resin particles with respect to the total amount of the ink is preferably 0.1% by mass to 10.0% by mass, more preferably 0.3% by mass to 8.0% by mass, still more preferably 0.3% by mass to 5.0% by mass, still more preferably 0.3% by mass to 3.0% by mass, and still more preferably 0.5% by mass to 1.0% by mass.

In a case where the content of the resin particles with respect to the total amount of the ink is 0.1% by mass or more, image flaws are further suppressed.

The ink according to the present disclosure in the aspect containing the resin particles may be prepared by using a commercially available resin emulsion (that is, an aqueous dispersion liquid of resin particles).

Examples of the commercially available resin emulsion include A-810 (Sansui Co., Ltd.), A-995 (Sansui Co., Ltd.), HIROS X • NE-2186 (SEIKO PMC CORPORATION), HIROS X • TE-1048 (SEIKO PMC CORPORATION), SAIVINOL SK-202 (Saiden Chemical Industry Co., Ltd.), TOCRYL W-1048 (TOYOCHEM CO., LTD.), WC-M-1217 (Arakawa Chemical industries, Ltd.), WC-M-1219 (Arakawa Chemical industries, Ltd.), N985 (A)-1 (Emulsion Technology Co., Ltd.), Neocryl A-1105 (DSM Coting Resin), ACRIT SE-810A, ACRIT SE-953A-2, ACRIT SE-1658F, ACRIT SE-2974F, ACRIT SE-2978F (Taisei Fine Chemical Co., Ltd.), LACSTAR 7132-C (DIC Corporation), ST200 (Nippon Shokubai Co., Ltd.), and MOVINYL 972 (Japan Coating Resin Co., Ltd.).

### -Water-Soluble Resin-

The resin in the ink may contain at least one kind of a water-soluble resin.

The definition "water-soluble" in the water-soluble resin is as described above.

Examples of the water-soluble resin include the above-described examples of the non-crosslinked resin.

### (Wax)

The ink according to the present disclosure contains at least one kind of a wax.

The wax is a base component for suppressing image flaws in the recording method according to the present disclosure.

Examples of the wax include a natural wax and a synthetic wax.

Examples of the natural wax include a petroleum wax, a plant wax, and an animal and plant wax.

Examples of the petroleum wax include a paraffin wax, a microcrystalline wax, and petrolatum.

Examples of the plant wax include a carnauba wax, a candelilla wax, a rice bran wax, and a Japan wax.

Examples of the animal and plant wax include lanolin and beeswax.

Examples of the synthetic wax include a synthetic hydrocarbon wax, a modified wax, and a resin wax.

Examples of the synthetic hydrocarbon wax include a polyethylene (PE) wax, a polypropylene (PP) wax, and a Fischer-Tropsch wax.

Examples of the modified waxes include a paraffin wax derivative, a montan wax derivative, a microcrystalline wax derivative, and a fatty acid amide derivative.

Examples of the resin wax include an acrylic wax and a urethane wax.

The melting temperature of the wax is preferably 170°C or lower, more preferably 100°C to 170°C, still more preferably 100°C to 160°C, and still more preferably 110°C to 150°C.

The melting temperature according to the present disclosure refers to an endothermic peak top temperature measured by differential scanning calorimetry (DSC), for example, a differential scanning calorimeter (product name "EXSTAR 6220", manufactured by Hitachi High-Tech Corporation).

The ink according to the present disclosure may be prepared using a commercially available product of an aqueous dispersion of the wax.

Examples of the commercially available product of the aqueous dispersion of the wax include:
HITEC E-6314 and HITEC E-9015 (manufactured by Toho Chemical Industry Co., Ltd.);
NOPCOAT PEM 17 (manufactured by SAN NOPCO Ltd.);
CHEMIPEARL (registered trademark) W4005 (manufactured by Mitsui Chemicals Inc.);
AQUACER 515, AQUACER 531, AQUACER 552, and AQUACER 593 (manufactured by BYK Japan K.K.); and
ZEROSOL 524 (manufactured by Chukyo Yushi Co., Ltd.).

### -Content (Cw) of Wax with respect to Total amount of Ink-

The content (Cw) of the wax with respect to the total amount of the ink is preferably 0.2% by mass to 5.0% by mass, more preferably 0.5% by mass to 3.0% by mass, and still more preferably 0.7% by mass to 2.5% by mass.

In the present disclosure, the content (% by mass) of the wax with respect to the total amount of the ink may be represented by "Cw".

### (Silicone-Based Surfactant)

The ink according to the present disclosure may contain at least one kind of a silicone-based surfactant. As a result, image flaws are further suppressed.

As the silicone-based surfactant, a polyether-modified silicone-based surfactant is preferable, and a compound represented by Formula (D1) is more preferable.

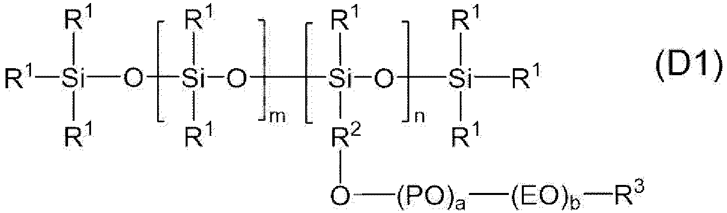

In Formula (D1), R¹'s each independently represent an alkyl group having 1 to 3 carbon atoms or a hydroxy group, R² represents an alkanediyl group having 2 to 5 carbon atoms, R³ represents a hydrogen atom, an alkyl group having 1 to 3 carbon atoms, or a hydroxy group, PO represents a propyleneoxy group, and EO represents an ethyleneoxy group. a, b, m, and n represent an average addition molar number of each unit, where a represents 0 to 10, b represents 1 to 50, m represents 1 to 500, and n represents 1 to 50.

In Formula (D1), the arrangement of PO and EO may be arrangement of a block copolymer or arrangement of a random copolymer.

In Formula (D1), arrangement t of a structural unit with a subscript m and a structural unit with a subscript n may be arrangement of a block copolymer or arrangement of a random copolymer.

R¹ represents preferably an alkyl group having 1 to 3 carbon atoms and more preferably a methyl group.

R² represents preferably an alkanediyl group having 3 or 4 carbon atoms and more preferably a trimethylene group.

R³ represents preferably an alkyl group having 1 to 3 carbon atoms and more preferably a methyl group.

It is more preferable that a represents 0, b represents 1 to 15, m represents 1 to 10, and n represents 1 to 5. Further, it is more preferable that a represents 0, b represents 3 to 10, m represents 1 to 3, and n represents 1 to 3.

As the silicone-based surfactant, a commercially available product may be used.

Examples of the commercially available product of the silicone-based surfactant include BYK-302, BYK-307, BYK-331, BYK-333, BYK-345, BYK-347, BYK-348, BYK-349, BYK-378, BYK-3400, BYK-3450, BYK-3451, BYK-3455, and BYK-3760 (all of which are manufactured by BYK Japan K.K.), KF-351A, KF-352A, KF-353, KF-354L, KF-355A, KF-615A, KF-945, KF-640, KF-642, KF-643, KF-644, KF-6011, KF-6012, KF-6015, KF-6017, and KF-6020 (all manufactured by Shin-Etsu Chemical Co., Ltd.), SILFACE SAG002, SILFACE SAG005, SILFACE SAG008, and SILFACE SAG503A (all of which are manufactured by Nissin Chemical Co., Ltd.), and TEGOWet KL245, TEGOWet 240, TEGOWet 250, TEGOWet 260, TEGOWet 270, and TEGOWet 280 (all manufactured by Evonik Industries AG).

These commercially available products are compounds represented by Formula (D1).

The content of the silicone-based surfactant with respect to the total amount of the ink is preferably 0.01% by mass to 3.0% by mass, more preferably 0.02% by mass to 2.0% by mass, and still more preferably 0.05% by mass to 1.5% by mass.

### (Surfactant other than Silicone-Based Surfactant)

The ink according to the present disclosure may contain at least one kind of a surfactant other than the silicone-based surfactant (hereinafter, also referred to as other surfactant).

Examples of the other surfactant include an acetylene glycol-based surfactant and an alkylene oxide adduct of an alcohol.

As the acetylene glycol-based surfactant, for example, a compound represented by Formula (A1) is preferable.

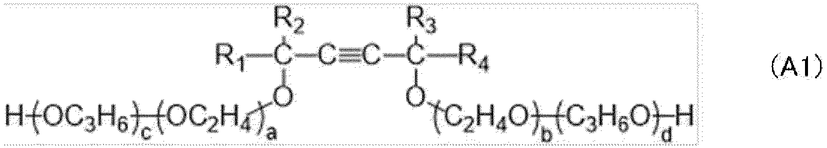

In Formula (A1), R₁ and R₄ each independently represent an alkyl group having 3 to 10 carbon atoms, and R₂ and R₃ each independently represent a methyl group or an ethyl group.
a, b, c, and d represent an average addition molar number of each unit and each independently represent 0 to 50.

Preferable examples of the acetylene glycol-based surfactant include:
acetylene glycol selected from the group consisting of 2,4,7,9-tetramethyl-5-decyne-4,7-diol, 3,6-dimethyl-4-octyne-3,6-diol, 2,5,6,11-tetramethyl-6-dodecyne-5,8-diol, 2,5-dimethyl-3-hexyne-2,5-diol, and 2,5,8,11-tetramethyl-6-dodecyne-5,8-diol; and
an ethylene oxide adduct of the acetylene glycol.

The acetylene glycol-based surfactant can be synthesized, for example, by causing acetylene to react with ketone or aldehyde corresponding to the target acetylene glycol.

The acetylene glycol-based surfactant can be obtained, for example, by a method described in "Introduction of New Surfactants" (published by Sanyo Chemical Industries, Ltd., completely revised edition, 1992) written by Takehiko Fujimoto, pp. 94 to 107.

Examples of the commercially available product of the acetylene glycol-based surfactant include SURFYNOL 104E (HLB value: 4), SURFYNOL 104H (HLB value: 4), SURFYNOL 104A (HLB value: 4), SURFYNOL 104PA (HLB value: 4), SURFYNOL 104PG-50 (HLB value: 4), SURFYNOL 104S (HLB value: 4), SURFYNOL 420 (HLB value: 4), SURFYNOL 440 (HLB value: 8), SURFYNOL 465 (HLB value: 13), SURFYNOL 485 (HLB value: 17), SURFYNOL SE (HLB value: 6), SURFYNOL SE-F (HLB value: 6), SURFYNOL 61 (HLB value: 6), SURFYNOL 82 (HLB value: 4), SURFYNOL DF110D (HLB value: 3), DYNOL 604 (HLB value: 8), DYNOL 607 (HLB value: 8), SURFYNOL 2502 (HLB value: 8), SURFYNOL TG (HLB value: 9), OLFINE E1004 (HLB value: 7 to 9), and OLFINE E1010 (HLB value: 13 to 14) (all of which are manufactured by Evonik Industries AG); and ACETYLENOL E00, ACETYLENOL E13T, ACETYLENOL E40, ACETYLENOL E60, ACETYLENOL E100, and ACETYLENOL E200 (all of which are manufactured by Kawaken Fine Chemicals Co., Ltd.).

As the alkylene oxide adduct of the alcohol, an ethylene oxide adduct of an alcohol or an ethylene oxide and propylene oxide adduct of an alcohol is preferable, and an ethylene oxide adduct of an alcohol is more preferable.

As the alkylene oxide adduct of the alcohol, a compound represented by Formula (2) is more preferable.

R₃O-[(EO)ₘ/(PO)ₙ]-H ... Formula (2)

In Formula (2), R₃ represents a hydrocarbon group having 6 or more and 30 or less carbon atoms, EO represents an ethyleneoxy group, and PO represents a propyleneoxy group.

In Formula (2), m and n represent an average addition molar number, m represents 2 or more and 100 or less, n represents 0 or more and 50 or less, and the sum of m and n represents 2 or more and 120 or less.

In Formula (2), the notation "(EO)ₘ/(PO)ₙ" represents that the arrangement of EO and PO may be arrangement of a random copolymer or arrangement of a block copolymer. In the moiety represented by "(EO)ₘ/(PO)ₙ", the addition order of EO and PO is not limited.

In Formula (2), in a case where n represents 2 or more, the compound represented by Formula (2) may be a block copolymer or a random copolymer. In a case where the compound represented by Formula (2) is a block copolymer, a compound in which an oxyethylene group is disposed on a hydroxy group side, that is, is preferably RO-(PO)(EO)-H.

In addition, in a case where the compound represented by Formula (2) is a block copolymer, the compound may be a triblock copolymer of RO-(EO)(PO)(EO)-H.

Examples of a commercially available product of the alkylene oxide adduct of the alcohol include:
as an ethylene oxide adduct of lauryl alcohol, EMULGEN 102 (HLB: 6.3, average addition molar number of EO: 2), EMULGEN 103 (HLB: 8.1, average addition molar number of EO: 3), EMULGEN 103 (HLB: 9.7, average addition molar number of EO: 4), EMULGEN 108 (HLB: 12.1, average addition molar number of EO: 6), EMULGEN 109P (HLB: 13.6, average addition molar number of EO: 8), EMULGEN 120 (HLB: 15.3, average addition molar number of EO: 13), EMULGEN 147 (HLB: 16.3, average addition molar number of EO: 17), and EMULGEN 150 (HLB: 18.4, average addition molar number of EO: 44) manufactured by Kao Corporation; and
as an ethylene oxide adduct of a secondary alcohol having 12 carbon atoms, TERGITOL TMN-3 (HLB: 8.1, average addition molar number of EO: 3), TRITON HW-1000 (HLB: 10, average addition molar number of EO: 6), TERGITOL TMN-6 (HLB: 13.1, average addition molar number of EO: 8), TERGITOL TMN-100X (HLB: 14.0, average addition molar number of EO: 9), and TERGITOL TMN-10 (HLB: 14.4, average addition molar number of EO: 10) manufactured by Dow Chemical Company.

In addition, examples of a commercially available product of the alkylene oxide adduct of the alcohol also include EMULGEN 707 (an ethylene oxide adduct of a secondary alcohol having 11 to 15 carbon atoms; HLB: 12.1, average addition molar number of EO: 6) and EMULGEN 220 (an ethylene oxide adduct of a linear primary alcohol having 16 to 18 carbon atoms; HLB: 14.2, average addition molar number of EO: 13) manufactured by Kao Corporation.

The content of the other surfactant with respect to the total amount of the ink is preferably 0.01% by mass to 5.0% by mass, more preferably 0.02% by mass to 4.0% by mass, and still more preferably 0.1% by mass to 3.0% by mass.

### (Water-Soluble Organic Solvent)

The ink according to the present disclosure may contain at least one kind of a water-soluble organic solvent.

As a result, the jettability of the ink is further improved.

In the present disclosure, "water-soluble" in the "water-soluble organic solvent" refers to a property in which 1 g or more of a substance is dissolved in 100 g of water at 25°C.

The type of the water-soluble organic solvent which can be contained in the ink is not particularly limited, and examples thereof include:
monoalcohol having 1 to 4 carbon atoms;
diol such as 1,3-propanediol, 1,2-butanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol;
triol such as glycerin, 1,2,6-hexanetriol, and trimethylolpropane;
alkylene glycol such as ethylene glycol and propylene glycol (another name: 1,2-propanediol);
alkylene glycol monoalkyl ether such as ethylene glycol monoalkyl ether and propylene glycol monoalkyl ether;
polyalkylene glycol such as diethylene glycol, triethylene glycol, tetraethylene glycol, pentaethylene glycol, dipropylene glycol, and polyoxyethylene polyoxypropylene glycol;
polyalkylene glycol ether such as diethylene glycol monoalkyl ether, triethylene glycol monoalkyl ether, tripropylene glycol monoalkyl ether, and polyoxypropylene glyceryl ether; and
2-pyrrolidone and N-methyl-2-pyrrolidone.

It is preferable that the water-soluble organic solvent in the ink includes at least one kind selected from the group consisting of alkylene glycol and alkylene glycol monoalkyl ether.

The content of the water-soluble organic solvent with respect to the total amount of the ink is preferably 10% by mass to 50% by mass and more preferably 15% by mass to 40% by mass.

### (Other Components)

Optionally, the ink according to the present disclosure may contain components other than the above-described components.

Examples of the other components include colloidal silica, waxes, inorganic salts, solid wetting agents (urea and the like), fading inhibitors, emulsion stabilizers, penetration enhancers, ultraviolet absorbing agents, preservatives, fungicides, pH adjusters, antifoaming agents, viscosity adjusters, dispersion stabilizers, rust inhibitors, chelating agents, and water-soluble polymer compounds.

### (Physical Properties of Ink)

### -Viscosity-

A viscosity of the ink according to the present disclosure is preferably 1.2 mPa·s to 15.0 mPa·s, more preferably 2.0 mPa·s to 13.0 mPa·s, and still more preferably 2.5 mPa·s to 10.0 mPa·s.

The viscosity of the ink is measured at a temperature of 30°C using a rotary viscometer, for example, product name "VISCOMETER TV-22" manufactured by Toki Sangyo Co., Ltd.

### -pH-

From the viewpoint of the storage stability of the ink, the pH of the ink according to the present disclosure is preferably 6.0 to 11.0, more preferably 7.0 to 10.0, and still more preferably 7.0 to 9.5.

The pH of the ink is measured at a temperature of 25°C using a pH meter, for example, product name "WM-50EG" manufactured by DDK-TOA CORPORATION.

### <RaX/Cw Ratio>

As described above, a ratio (that is, RaX/Cw ratio) of RaX that is an arithmetic average roughness Ra of the outer peripheral surface of the guide roller to Cw% by mass that is the content of the wax with respect to the total amount of the ink is 1.0 to 4.0.

The RaX/Cw ratio is preferably 1.3 to 3.5 and more preferably 1.4 to 3.0.

In a case where the RaX/Cw ratio is 1.3 or more, a decrease in the jettability of the ink is further suppressed.

In a case where the RaX/Cw ratio is 3.5 or less, image flaws are further suppressed.

### <Cw/Ct Ratio>

In the recording method according to the present disclosure, in a case where the content of the wax with respect to the total amount of the ink is represented by Cw% by mass and the total content of the pigment, the resin, and the wax with respect to the total amount of the ink is represented by Ct% by mass, The Cw/Ct ratio is preferably 0.05 to 0.35, more preferably 0.09 to 0.35, and still more preferably 0.10 to 0.30.

In a case where the Cw/Ct ratio is 0.05 or more, image flaws are further suppressed.

In a case where the Cw/Ct ratio is 0.35 or less, a decrease in the jettability of the ink is further suppressed.

### <Ct>

In the recording method according to the present disclosure, Ct that is the total content (% by mass) of the pigment, the resin, and the wax with respect to the total amount of the ink is 5.0% by mass to 11.0% by mass.

As described above, by adjusting Ct to be 11.0% by mass or less, a decrease in the jettability of the ink is suppressed.

By adjusting Ct to be 5.0% by mass or more, image flaws are suppressed.

Ct is preferably 5.5% by mass to 10.0% by mass, more preferably 5.5% by mass to 8.0% by mass.

### <Cw/Cp Ratio>

In the recording method according to the present disclosure, in a case where the content of the wax with respect to the total amount of the ink is represented by Cw% by mass and the content of the resin with respect to the total amount of the ink is represented by Cp% by mass, the Cw/Cp ratio is preferably 0.10 to 1.60, more preferably 0.50 to 1.50, and still more preferably 0.50 to 1.30.

In a case where the Cw/Cp ratio is 0.10 or more, image flaws are further suppressed.

In a case where the Cw/Cp ratio is 1.60 or less, a decrease in the jettability of the ink is further suppressed.

### Examples

Hereinafter, the present disclosure will be described in more detail using Examples. However, the present disclosure is not limited to the following examples as long as it does not exceed the gist of the present disclosure.

In a case where each of inks was prepared, each of pigment dispersion liquids and a binder resin were manufactured in advance to prepare each of the inks using each of the pigment dispersion liquids and the binder resin.

### <Synthesis of Water-Soluble Resin as Pigment Dispersing Resin Precursor>

As a precursor of a crosslinked resin 1 as the pigment dispersing resin described below, a water-soluble resin 1 (non-crosslinked resin) was synthesized.

Hereinafter, the details will be described.

A monomer feed composition was prepared by mixing methacrylic acid (172 parts by mass), benzyl methacrylate (828 parts by mass), and isopropanol (375 parts by mass).

In addition, 2,2-azobis(2-methylbutyronitrile) (22.05 parts by mass) and isopropanol (187.5 parts by mass) were mixed to prepare an initiator feed composition.

Next, isopropanol (187.5 parts by mass) was heated to 80°C in a nitrogen atmosphere, and a mixture of the monomer feed composition and the initiator feed composition was added dropwise thereto over 2 hours. After completion of the dropwise addition, the obtained solution was further maintained at 80°C for 4 hours and then cooled to 25°C. After the cooling, a solvent was removed under reduced pressure to obtain the water-soluble resin 1 (methacrylic acid/benzyl methacrylate copolymer). In the obtained water-soluble resin 1, the weight-average molecular weight was about 30,000, and the acid value was 112 mgKOH/g.

### <Preparation of Cyan Pigment Dispersion Liquid>

0.8 equivalents of the amount of methacrylic acid in the obtained water-soluble resin 1 (150 parts by mass) were neutralized with a potassium hydroxide aqueous solution. Next, ion exchange water was added thereto to adjust the concentration to 25% by mass to obtain an aqueous solution of a water-soluble resin Q-1.

The water-soluble resin Q-1 is a neutralized product of the water-soluble resin 1 obtained by changing the carboxy group (-C(=O)OH group) in the above-described water-soluble resin 1 to a -C(=O)ONa group.

The aqueous solution (124 parts by mass) of the water-soluble resin Q-1, a cyan pigment (Pigment Blue 15:3 (phthalocyanine blue-A220, manufactured by Dainichiseika Color & Chemicals Mfg. Co., Ltd.) (48 parts by mass), water (75 parts by mass), and dipropylene glycol (30 parts by mass) were mixed and dispersed using a beads mill (bead diameter of 0.1 mmφ, zirconia beads) until a desired volume average particle diameter was obtained to obtain a dispersion liquid (non-crosslinked dispersion liquid) in which the cyan pigment was dispersed by the water-soluble resin Q-1. The pigment concentration of the cyan pigment in the non-crosslinked dispersion liquid was 15% by mass.

Trimethylolpropane polyglycidyl ether (product name, "Denacol EX-321", manufactured by Nagase ChemteX Corporation) (1.3 parts by mass) as a crosslinking agent and a boric acid aqueous solution (boric acid concentration: 4% by mass) (14.3 parts by mass) were added to this non-crosslinked dispersion liquid (136 parts by mass), and the solution was allowed to react at 50°C for 6 and a half hours and cooled to 25°C. As a result, the water-soluble resin Q-1 was crosslinked with the crosslinking agent.

As a result, a dispersion liquid (crosslinked dispersion liquid) where the cyan pigment was dispersed by the crosslinked resin 1 as the pigment dispersing resin was obtained. Here, the crosslinked resin 1 was a pigment dispersing resin where the water-soluble resin Q-1 was crosslinked with the above-described crosslinking agent.

Next, ion exchange water was added to the obtained crosslinked dispersion liquid, and ultrafiltration was performed using a stirring type ULTRAHOLDER (manufactured by Advantec AS) and an ultrafiltration filter (manufactured by Advantec AS, molecular weight cutoff of 50,000, Q0500076E ULTRAFILTER). A cyan pigment dispersion liquid (cyan pigment concentration of 15% by mass) in which the cyan pigment was dispersed by the crosslinked resin 1 was obtained by performing purification such that the concentration of dipropylene glycol in the crosslinked dispersion liquid was set to 0.1% by mass or less and performing concentration until the pigment concentration reached 15% by mass.

### <Preparation of Aqueous Dispersion Liquid of Resin Particles>

A three-neck flask equipped with a stirrer, a thermometer, a reflux condenser, and a nitrogen gas introduction pipe was charged with water (250 g), 12-methacrylamidododecanoic acid (6.7 g), potassium hydrogen carbonate (0.17 g), and isopropanol (20 g) and was heated to 85°C under a nitrogen stream. Here, a mixed solution consisting of 4,4'-azobis(4-cyanovaleric acid) (radical polymerization initiator, product name, "V-501", manufactured by FUJIFILM Wako Pure Chemical Corporation) (0.11 g), potassium hydrogen carbonate (0.08 g), and water (9 g) was added thereto, and the mixture was stirred for 10 minutes. Next, a monomer solution consisting of styrene (14 g), benzyl methacrylate (14 g), methyl methacrylate (48 g), butyl methacrylate (3.3 g), and hydroxyethyl methacrylate (14 g) was added dropwise to the three-neck flask at a constant rate until the dropwise addition was completed in 3 hours. Further, a mixed solution consisting of V-501 (0.06 g), potassium hydrogen carbonate (0.04 g), and water (6 g) was added to the solution twice, immediately after the start of dropwise addition of the monomer solution and 1.5 hours after the start of dropwise addition of the monomer solution. After completion of the dropwise addition of the monomer solution, the mixed solution was stirred for 1 hour. Next, a mixed solution consisting of V-501 (0.06 g), potassium hydrogen carbonate (0.04 g), and water (6 g) was added to the obtained reaction mixture, and the mixture was further stirred for 3 hours. The obtained reaction mixture was filtered through a mesh having a mesh size of 50 µm, thereby obtaining an aqueous dispersion liquid of resin particles.

### [Example 1]

### <Preparation of Cyan Ink>

The respective components were mixed according to the following composition to obtain a mixed solution. Next, coarse particles were removed from the above-described mixed solution using a 1 µm filter to obtain a cyan ink.

### -Composition-

### (Pigment)

· Cyan pigment dispersion liquid (aqueous dispersion liquid having a pigment concentration of 15% by mass) ... amount adjusted such that, in the ink, the content of the pigment was 3.0 parts by mass and the content of the pigment dispersing resin was 0.9 parts by mass.
(Water-Soluble Organic Solvent)
· Diethylene glycol monoethyl ether (DEGmEE) (manufactured by Daicel Corporation) ... 15 parts by mass
· Propylene glycol (PG) (manufactured by ADEKA Corporation) ... 20 parts by mass

### (Resin Particles)

· The prepared dispersion liquid of the resin particles (concentration of solid contents: 25% by mass) ... amount adjusted such that the content of the resin particles was 0.9 parts by mass

### (Surfactant)

· "SURFYNOL 104PG50" (solid content of 50% by mass) (manufactured by Nissin Chemical Co., Ltd., acetylene glycol-based surfactant; 2,4,7,9-tetramethyl-5-decyne-4,7-diol) ... 2.0 parts by mass
· "EMULGEN 108" (manufactured by Kao Corporation, a polyoxyethylene alkyl ether-based surfactant that is lauryl ether in which the repetition number of polyoxyethylene is 6) ... 1.0 parts by mass
· BYK-345 (manufactured by BYK -Chemie GmbH, a silicone-based surfactant having a structure represented by Formula (D1), in which a represents 0, b represents 5.9, m represents 1.8, and n represents 1 in Formula (D1) ... 0.4 parts

### (Wax)

· "AQUACER 531" (manufactured by BYK Japan K.K., PE Wax Emulsion) (solid content of 45% by mass) ... amount adjusted such that the content of the wax was 1.4 parts by mass

### (Other Components)

· Urea (manufactured by Nissan Chemical Corporation) ... 2.0 parts by mass
· Water ... amount adjusted such that the total amount was 100 parts by mass

### <Ink Jet Recording>

An ink jet recording device having the same configuration as the ink jet recording device shown in Fig. 1 was prepared. As each of ink jet heads in the ink jet recording device, an ink jet recording line head "KJ4B-1200" (manufactured by KYOCERA Corporation) (1200 dpi high image quality model) was used.

The magenta ink prepared as described above was jetted from one of the ink jet heads in the ink jet recording device and applied to a recording medium. While transporting the recording medium to which the ink was applied, the inked to the recording medium was heated and dried. As a result, ink jet recording was performed.

Detailed conditions of the ink jet recording are as follows.

### <Conditions of Ink Jet Recording>

· Recording medium: product name "OK TOPCOAT", manufactured by Oji Paper Co., Ltd. (amount of water absorption: 4.9 g/m²)
· Transport mechanism of recording medium: roll-to-roll
· Temperature of ink jet head: 32°C
· Resolution of ink jet head: 1200 × 1200 [dot per inch (dpi)]
· Jetting liquid droplet size of ink: 3.0 [pL]
· Environment around inkjet head: temperature 25°C ± 1°C, relative humidity 25°C ± 5%
· Transportation speed: 100 [m/min] during both of ink application and heating and drying
· Tension of recording medium during transport: 60 N
· Recorded image: solid image
· Heating method: a heating roller (the heating temperature was adjusted such that the temperature of the surface of the ink film was as shown in "Drying temperature of Ink" in Table 1), a heating drum (heating temperature: 120°C), and a hot air drying device (not illustrated, hot air temperature: 130 [°C], wind speed: 20 [m/s]) A plurality of dryers as the hot air drying device were disposed outside the heating rollers disposed in the arc shape. Using these dryers, hot air was blown to the inked surface in the recording medium.
· Guide roller, heating roller, heating drum: prepared according to paragraphs 0063 to 0082 of JP2020-16355A

The following matters in the ink jet recording are as shown in Table 1 below.
· Drying temperature of ink (temperature of surface of ink film)
· The drying temperature of the ink was the melting temperature of the wax or lower (Y ... Corresponding, N ... Not Corresponding)
· Surface roughness Ra (Rax) of outer peripheral surface of guide roller (µm)
· RaW/Cw
· Cw/Ct
· Amount of resin (Cp)
· Cw/Cp
· Kinetic friction coefficient of outer peripheral surface of guide roller
· Kind of fluororesin in surface layer of guide roller
· Kinetic friction coefficient of outer peripheral surface of guide roller
· Surface roughness Ra (Rax) of outer peripheral surface of guide roller (µm)
· TOF-SIMS analysis result of image surface (wax > pigment) (Y ... Corresponding, N ... Not Corresponding)

### <Evaluation of Jettability of Ink>

The cyan ink was continuously jetted from all of nozzles of the ink jet head for 45 minutes at an ink liquid droplet amount of 3 pL and a jetting frequency of 24 kHz. It was previously verified that the ink was jetted from all of the nozzles at the start of jetting.

After completion of the continuous jetting for 45 minutes, the number of nozzles from which the ink was able to be jetted till the end (number of jetting nozzles after completion of the continuous jetting for 45 minutes) was counted. Using this number of jetting nozzles, an ink jetting ratio was calculated from the following formula, and jettability of the ink was evaluated based on the following evaluation standards.

The results are shown in Table 1.

In the following evaluation standards, the rank at which the jettability of the ink was the highest is "A". Ink jetting ratio (%) = (number of jetting nozzles after completion of continuous jetting for 45 minutes) / (total number of nozzles) × 100

### -Evaluation Standard for Jettability-

A: the ink jetting ratio after the completion of the continuous jetting for 45 minutes was 98% or more
B: the ink jetting ratio after the completion of the continuous jetting for 45 minutes was 92% or more and less than 98%
C: the ink jetting ratio after the completion of the continuous jetting for 45 minutes was less than 92%

### <Evaluation of Image Flaws>

Using the ink jet recording device and the cyan ink, a solid image of Duty 100% was continuously recorded on the recording medium.

The obtained solid image was observed by visual inspection by five evaluators, and each of the evaluators graded the solid image based on the following evaluation scores.

Next, the average score of the evaluation scores given by the five evaluators was obtained, and image flaws were evaluated according to the following standards based on the obtained average score.

The results are shown in Table 1.

### -Evaluation Score-

4: No flaws were observed in the image.
3: Flaws were not observed by visual inspection but were observed with a magnifying glass.
2: Image flaws were slightly observed by visual inspection.
1: Image flaws caused by transport were clearly observed.

### -Evaluation Standards of Image Flaws-

AA: The average score of the evaluation scores given by the five evaluators was 4.0.
A: The average score of the evaluation scores given by the five evaluators was 3.5 or more.
B: The average score of the evaluation scores given by the five evaluators was 3.0 or more and less than 3.5.
C: The average score of the evaluation scores given by the five evaluators was less than 3.0.

### [Examples 2 to 11 and Comparative Examples 1 to 4]

The same operation as that of Example 1 was performed, except that
the content of the resin particles in the ink,
the content (Cw) of the wax particles in the ink,
the kind of the wax in the ink,
the drying temperature of the ink (specifically, the heating temperature by the heating roller),
the surface roughness Ra (RaX) of the outer peripheral surface of the guide roller,
the kinetic friction coefficient of the outer peripheral surface of the guide roller, and
the kind of the fluororesin in the surface layer of the guide roller
were changed as shown in Table 1.

The results are shown in Table 1.

The details of the kind of the wax in Table 1 are as described below.
· AQ531 ... "AQUACER 531" (manufactured by BYK Japan K.K., PE Wax Emulsion)
. AQ593 ... "AQUACER 593" (manufactured by BYK Japan K.K., PP Wax Emulsion)
· E6314 ... "HITEC E-6314" (manufactured by Toho Chemical Industry Co., Ltd., PE Wax Emulsion)

The kind of the fluororesin in the surface layer of the guide roller in Table 1 is as follows.
· FEP ... tetrafluoroethylene-hexafluoropropylene copolymer
· PTFE ... polytetrafluoroethylene

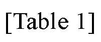

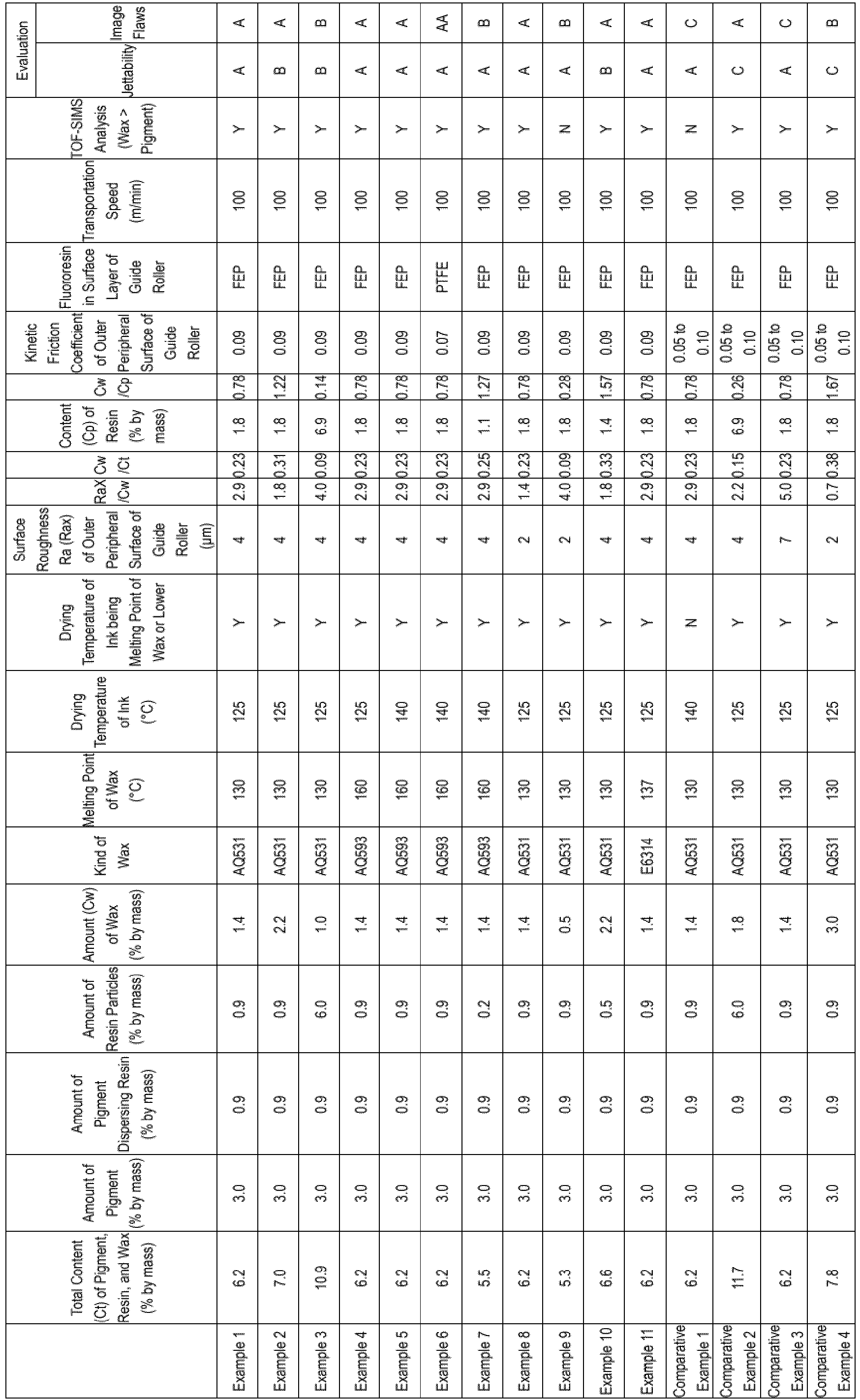

As shown in Table 1, in Examples 1 to 11 where
a total content of the pigment, the resin (that is, the pigment dispersing resin and the resin particles), and the wax with respect to a total amount of the ink is 5.0% by mass to 11.0% by mass,
a drying temperature of the ink in the heating and drying is 120°C or higher and a melting temperature of the wax or lower, and
in a case where a content of the wax with respect to the total amount of the ink is represented by Cw% by mass and a surface roughness Ra of an outer peripheral surface of the guide roller defined according to JIS B0601:2013 is represented by RaX µm, a RaX/Cw ratio is 1.0 to 4.0,
a decrease in the jettability of the ink was able to be suppressed, and image flaws were able to be suppressed.

On the other hand, in Comparative Example 1 where the drying temperature of the ink in the heating and drying exceeds the melting temperature of the wax, image flaws occurred.

In addition, in Comparative Example 2 where the total content of the pigment, the resin (that is, the pigment dispersing resin and the resin particles), and the wax with respect to a total amount of the ink is more than 11.0% by mass, the jettability of the ink decreased.

In addition, in Comparative Example 3 where the RaX/Cw ratio exceeds 4.0, image flaws occurred.

In addition, in Comparative Example 4 where the RaX/Cw ratio is less than 1.0, the jettability of the ink decreased.

It can be seen from the results of Examples 8 and 9 that, in a case where the Cw/Ct ratio is 0.10 or more (Example 8), image flaws can be further suppressed.

It can be seen from the results of Examples 8 and 10 that, in a case where the Cw/Ct ratio is 0.30 or less (Example 8), a decrease in the jettability of the ink can be further suppressed.

It can be seen from the results of Examples 8 and 9 where, in a case where the Cw/Cp ratio is 0.50 or more (Example 8), image flaws can be further suppressed.

It can be seen from the results of Examples 8 and 10 where, in a case where the Cw/Cp ratio is 1.50 or less (Example 8), a decrease in the jettability of the ink can be further suppressed.

It can be seen from the results of Examples 8 and 9 that, in a case where "wax/pigment" in the TOF-SIMS analysis is "Y", (that is, in a case where the peak intensity of the wax is higher than the peak intensity of the pigment) (Example 8), image flaws can be further suppressed.

The disclosure of Japanese Patent Application No. 2022-189590 filed on November 28, 2022 is incorporated herein in its entirety.

All documents, patent applications, and technical standards described in the present specification are herein incorporated by reference to the same extent that each individual document, patent application, or technical standard was specifically and individually indicated to be incorporated by reference.

## Claims

1. An ink jet recording method comprising:
applying ink to a recording medium by an ink jet method while transporting the recording medium at a transportation speed of 60 m/min or higher; and
heating and drying the inked to the recording medium while transporting the recording medium to which the ink is applied at a transportation speed of 60 m/min or higher to obtaining an image,
wherein the heating and drying is performed using a heating drying device including
a heating roller configured to come into contact with a non-inked surface in the recording medium to which the ink is applied and to heat the inked to the recording medium through the recording medium and
a guide roller configured to come into contact with an inked surface in the recording medium to which the ink is applied and to guide the recording medium to which the ink is applied,
the ink contains water, a pigment, a resin, and a wax,
a total content of the pigment, the resin, and the wax with respect to a total amount of the ink is 5.0% by mass to 11.0% by mass,
a drying temperature of the ink in the heating and drying is 120°C or higher and a melting temperature of the wax or lower, and
in a case where a content of the wax with respect to the total amount of the ink is represented by Cw% by mass and an arithmetic average roughness Ra of an outer peripheral surface of the guide roller defined according to JIS B0601:2013 is represented by RaX µm, a RaX/Cw ratio is 1.0 to 4.0.

2. The ink jet recording method according to claim 1,
wherein in a case where the content of the wax with respect to the total amount of the ink is represented by Cw% by mass and the total content of the pigment, the resin, and the wax with respect to the total amount of the ink is represented by Ct% by mass, a Cw/Ct ratio is 0.10 to 0.30.

3. The ink jet recording method according to claim 1,
wherein in a case where the content of the wax with respect to the total amount of the ink is represented by Cw% by mass and a content of the resin with respect to the total amount of the ink is represented by Cp% by mass, a Cw/Cp ratio is 0.50 to 1.50.

4. The ink jet recording method according to claim 1,
wherein a kinetic friction coefficient of the outer peripheral surface of the guide roller is 0.03 to 0.10.

5. The ink jet recording method according to claim 1,
wherein the guide roller includes a surface layer containing a fluororesin.

6. The ink jet recording method according to claim 1,
wherein both of a transportation speed of the recording medium during the application of the ink and a transportation speed of the recording medium during the heating and drying are 100 m/min or higher.

7. The ink jet recording method according to claim 1,
wherein in TOF-SIMS analysis on a surface of the image, a peak intensity of the wax is higher than a peak intensity of the pigment.

8. The ink jet recording method according to claim 1,
wherein the resin contains resin particles, and
a content of the resin particles with respect to the total amount of the ink is 0.3% by mass to 5.0% by mass.

9. An ink jet recording device for use in the ink jet recording method according to any one of claims 1 to 8, the ink jet recording device comprising:
an ink jet head configured to apply the ink to the recording medium; and
the heating drying device.
